# EUROPÄISCHE PATENTANMELDUNG

(11) **EP 0 573 939 A1**
(43) Veröffentlichungstag der Anmeldung: **15.12.1993**
(21) Anmeldenummer: 93109125.0
(22) Anmeldetag: 07.06.1993
(51) Int. Cl.: A01B 1/18

(54) **Gerät zum Jäten von Unkraut**

(30) Priorität: 06.06.1992 DE 9207688 U
(71) Anmelder: Weiss, Heinz, D-4000 Düsseldorf 11 (DE)
(72) Erfinder: Weiss, Heinz, D-4000 Düsseldorf 11 (DE)
(74) Vertreter: Döring, Wolfgang, Dr. Ing.

(57) **Zusammenfassung**

Es wird ein Gerät zum Jäten von Unkraut, Auflockern von Erde, Aufheben von Abfällen u. dgl. mit zwei an einem Ende miteinander verbundenen Schenkeln (2), deren Vorderenden einen Bearbeitungsabschnitt und deren rückwärtige Enden einen Griffabschnitt bilden, beschrieben. Die Schenkel (2) weisen vom Bearbeitungsabschnitt (8) her gesehen vor ihrer Verbindungsstelle auf ihren Innenseiten je eine sich in Richtung zur Verbindungsstelle vertiefende Führungsrille (5) auf. In den beiden benachbarten Führungsrillen (5) der Schenkel (2) ist ein durch Spreizen der Schenkel (2) vor- und zurückbewegbarer Körper angeordnet, in dessen Vorderstellung die Schenkel (2) eine permanente gespreizte Arbeitsstellung einnehmen und in dessen rückwärtiger Lage die Schenkel (2) parallel zueinander angeordnet sind.

## Beschreibung

Die vorliegende Erfindung betrifft ein Gerät zum Jäten von Unkraut, Auflockern von Erde, Aufheben von Abfällen u. dgl. mit zwei an einem Ende miteinander verbundenen Schenkein, deren Vorderenden einen Bearbeitungsabschnitt und deren rückwärtige Enden einen Griffabschnitt bilden.

Ein derartiges Gerät ist aus der DE-OS 37 19 109 bekannt. Das Gerät ist zangenförmig oder pinzettenartig ausgebildet. Die als Bearbeitungsabschnitt ausgebildeten Vorderenden der beiden Schenkel können sowohl durch Zusammenklemmen zum Aufheben von Gegenständen, beispielsweise Abfall, Unkraut etc., als auch zum Hacken bzw. Auflockern des Bodens verwendet werden. Das Gerät eignet sich insbesondere für Arbeiten im Garten, auf Friedhöfen oder zur Pflege von Blumenkästen und hat den Vorteil, daß es als Universalgerät sowohl zur Bodenbearbeitung als auch zum Entfernen bzw. Aufheben von Unkraut, Abfall u. dgl. verwendet werden kann. Die Hand des Benutzers muß daher nicht in unmittelbaren Kontakt mit dem Unkraut, Abfall u. dgl. treten, so daß ein Verschmutzen und/oder Verletzen der Hände ausgeschlossen ist. Andererseits kann das Gerät, abhängig von der jeweiligen Ausgestaltung des Bearbeitungsabschnittes, ähnlich einer Harke, Schaufel oder Hacke zum Auflockern der Erde und Losstoßen bzw. Losziehen von Unkraut verwendet werden, wobei wegen der relativ kleinen Abmessungen des Bearbeitungsabschnittes auch ein punktuelles Bearbeiten, beispielsweise unmittelbar in der Nähe des Wurzelbereiches oder Stammes einer Pflanze, besonders gut durchgeführt werden kann, ohne daß es hierbei zu einer unerwünschten Beschädigung der Pflanze kommt. Auch können ohne Schwierigkeiten größere Flächen bearbeitet werden, da bedingt durch die Abmessungen der Vorrichtung keine kniende oder weit vorgebeugte Arbeitshaltung erforderlich ist. Andererseits sind die Abmessungen des Gerätes jedoch so klein ausgewählt, daß es zu jeder Zeit besonders einfach und komfortabel mitgenommen werden kann, was sich insbesondere beispielsweise für die Anwendung des Gerätes auf Friedhöfen als angenehm und zweckdienlich erwiesen hat.

Der vorliegenden Erfindung liegt nunmehr die Aufgabe zugrunde, ein derartiges Gerät so weiterzubilden, daß sich eine noch bessere Handhabbarkeit und Transportfähigkeit ergibt.

Diese Aufgabe ist erfindungsgemäß bei einem Gerät der eingangs beschriebenen Art dadurch gelöst, daß die Schenkel vom Bearbeitungsabschnitt her gesehen vor ihrer Verbindungsstelle auf ihren Innenseiten je eine sich in Richtung zur Verbindungsstelle vertiefende Führungsrille aufweisen und daß in den beiden benachbarten Führungsrillen der Schenkel ein durch Spreizen der Schenkel vor- und zurückbewegbarer Körper angeordnet ist, in dessen Vorderstellung die Schenkel eine permanente gespreizte Arbeitsstellung einnehmen und und in dessen rückwärtiger Lage die Schenkel parallel zueinander angeordnet sind.

Das erfindungsgemäß ausgebildete Gerät läßt sich somit in einfacher Weise in zwei verschiedene Stellungen überführen, wodurch sich die Handhabbarkeit des Gerätes bei der Arbeit und beim Transport verbessern läßt. Im Normalzustand, d. h. Transportzustand, des Gerätes nimmt der bewegbare Körper seine hintere Lage ein, in der er von den beiden benachbarten Führungsrillen voll aufgenommen ist, so daß die beiden Schenkel parallel zueinander angeordnet sind. In dieser Lage der Schenkel läßt sich das Gerät besonders gut transportieren, da es hier am wenigsten sperrig ist.

Wenn das Gerät von der Transportstellung in die Arbeitsstellung überführt werden soll, hält der Benutzer das Gerät in einer aufrechten Stellung, so daß die beiden Vorderenden der Schenkel nach unten zeigen. Beide Vorderenden werden dann auseinandergespreizt. Hierdurch kann sich der Körper in den beiden Führungsrillen durch Schwerkraft nach unten bzw. vorne bewegen und seine vorderste Stellung am Vorderende der Führungsrillen einnehmen. Läßt man sich die Schenkel nunmehr gegeneinander zurückbewegen, so können sie aufgrund des seitlich aus den Rillen vorstehenden Körpers keine Parallellage mehr einnehmen, sondern verbleiben in einer Spreizstellung. Aufgrund der in dieser Stellung von den Schenkeln auf den Körper ausgeübten Vorspannung ist dieser fixiert und kann sich, selbst bei einem Umdrehen des Gerätes, nicht mehr in den Führungsrillen zurückbewegen. Das Gerät erhält daher eine stabile Arbeitsstellung, in der entsprechende Hackvorgänge, Auflockerungsvorgänge etc. durchgeführt werden können. Will man das Gerät zum Greifen benutzen, so wird es vor dem Körper ergriffen, und beide Schenkel werden gegeneinanderbewegt, um einen aufzuhebenden Gegenstand an den Vorderenden der Schenkel einzuklemmen. Soll der Gegenstand abgelegt werden, wird der auf die Schenkel ausgeübte Druck entlastet, so daß die Schenkel selbsttätig wieder in ihre durch den Körper vorgegebene Spreizstellung zurückkehren.

Wenn das Gerät nunmehr wieder in seine Transportstellung überführt werden soll, wird es wiederum in eine aufrechte Stellung überführt, wobei nunmehr sich die Vorderenden der Schenkel oben befinden. Die Schenkel werden dann geringfügig weiter auseinandergespreizt, so daß von den Schenkeln kein seitlicher Druck mehr auf den Körper ausgeübt wird. Der Körper kann sich dann durch Schwerkraft in den beiden Führungsrillen wieder nach unten bewegen und gelangt in seine Ausgangsstellung am anderen Ende der beiden Rillen zurück. Wenn kein Druck mehr auf die Vorderenden der Schenkel ausgeübt wird, bewegen sich diese selbsttätig gegeneinander und nehmen wieder ihre Parallellage ein, da der Körper in seiner rückwärtigen Endlage voll in den schrägen Führungsrillen aufgenommen ist und keine Spreizung der Schenkel mehr verursacht.

Der Bearbeitungsabschnitt des Gerätes, d. h. die Vorderenden der beiden Schenkel, kann beliebig ausgebildet sein, wenn diese Schenkel nur gleichzeitig als Hack-, Jät- bzw. Auflockerungswerkzeuge einerseits und als Klemmwerkzeuge andererseits geeignet sind. Beispielsweise können die in der eingangs erwähnten DE-OS 37 19 109 beschriebenen Ausführungsformen zur Anwendung gelangen. Bei einer besonders bevorzugten Ausführungsform sind die Schenkel in ihrem vorderen Bereich um 90° nach unten abgebogen. Durch diese abgebogenen Vorderenden läßt sich das Gerät besonders gut zum Hacken, Auflockern etc. einsetzen, andererseits kann es jedoch gleichzeitig als Klemmwerkzeug dienen.

In zweckmäßiger Weiterbildung weisen bei dem erfindungsgemäß ausgebildeten Gerät die beiden Führungsrillen an ihren Vorder- und/oder Ober- und Unterrändern zum anderen Schenkel hin vorstehende, ineinander greifende Abschnitte auf, die ein Herausfallen des Körpers verhindern. Hierbei sind die Abschnitte der beiden Schenkel geringfügig versetzt zueinander angeordnet, so daß beim Schließen der Schenkel die Abschnitte aneinander vorbeigleiten können. In der Parallellage der Schenkel liegen diese vorzugsweise nicht unmittelbar aneinander an, so daß die vorstehenden Abschnitte den Zwischenraum zwischen den Schenkeln überbrücken.

Die Führungsrillen erstrecken sich zweckmäßigerweise im Abstand von der Ober- und Unterkante der Schenkel, so daß sie in der Draufsicht und Unteransicht des Gerätes nicht sichtbar sind. Hierdurch kann der Körper nicht nach oben oder unten herausfallen. Die oberen und unteren Begrenzungen der Rillen verhindern dies.

Der bewegbare Körper ist vorzugsweise eine Kugel. Obwohl durchaus auch Gleitkörper, beispielsweise ein vor- und zurückbewegbarer Block, Verwendung finden können, werden Rollkörper bevorzugt, da diese eine einwandfreie Hin- und Herbewegung sicherstellen und die Gefahr eines Festsitzens, Verkantens u. dgl. weitgehend ausgeschaltet ist.

Die beiden schrägen Führungsrillen sind derart geneigt bzw. der bewegbare Körper steht in seiner vordersten Lage so weit seitlich vor, daß die Vorderenden der Schenkel vorzugsweise etwa mit einem Abstand von 6 cm gespreizt sind. Diese Stellung hat sich für die Handhabung des Gerätes als besonders geeignet erwiesen.

Die Verbindung zwischen den beiden Schenkeln erfolgt vorzugsweise über einen Niet. Die Schenkel bestehen aus Metall (Stahl), das, abgesehen von den als Bearbeitungsabschnitten ausgebildeten Vorderenden, mit einer Kunststoffummantelung umgeben ist, welche ein Griffende bildet. So ist vorzugsweise die Unterseite am Griffende mit geeigneten Fingerrillen versehen, um ein sicheres und festes Ergreifen zu ermöglichen. Das metallische Material ist entsprechend elastisch, um das Auseinanderspreizen und Zusammendrücken zu ermöglichen. Die Schenkel sind vorzugsweise im Bereich des Griffabschnittes höher ausgebildet und laufen zu den Vorderenden hin relativ spitz zu. Die Vorderenden sind zweckmäßigerweise profiliert, um entsprechende Bearbeitungsabschnitte vorzusehen.

Die Erfindung wird nachfolgend anhand eines Ausführungsbeispiels in Verbindung mit der Zeichnung im einzelnen erläutert. Es zeigen:
- Figur 1: eine Draufsicht auf eine Ausführungsform eines erfindungsgemäß ausgebildeten Gerätes im Transportzustand;
- Figur 2: eine Draufsicht auf das Gerät der Figur 1 in der Arbeitsstellung;
- Figur 3: eine vergrößerte Teildraufsicht auf das Gerät der Figuren 1 und 2 im Tansportzustand; und
- Figur 4: eine Seitenansicht des Gerätes der Figuren 1 bis 3 im verkleinerten Maßstab.

Wie man den Figuren entnehmen kann, besitzt das neuerungsgemäß ausgebildete Gerät 1 zum Jäten zwei zangen- bzw. pinzettenförmig angeordnete Schenkel 2, die an ihrem hinteren und in der Figur rechten Ende einen Griffabschnitt und an ihrem vorderen und in der Figur linken Ende einen Arbeitsabschnitt aufweisen. Wie Figur 4 zeigt, sind die Schenkel in ihrem vorderen Bereicht um 90° nach unten abgebogen und bilden dort die jeweiligen Arbeitsabschnitte 9. Die Schenkel bestehen aus Stahl und laufen an ihren Vorderenden spitz zu. Andere Ausgestaltungen des Bearbeitungsabschnittes sind ebenfalls möglich.

Die Schenkel sind über den größten Teil ihrer Länge mit einem geeigneten Kunststoffüberzug versehen, der bei 9 einen geeigneten Griffabschnitt bildet, wobei auf der Unterseite eines jeden Schenkels entsprechende Griffmulden vorgesehen sind. Beide Schenkel sind in ihrem hinteren Endbereich über einen geeigneten Niet 3 miteinander verbunden. Die Schenkel sind in ihrem Normal- bzw. Transportzustand parallel zueinander angeordnet und weisen einen Abstand voneinander auf, der durch eine geeignete, den Niet 3 umgebende Hülse 4 festgelegt ist.

In dem Bereich kurz vor dem Niet 3 befindet sich auf der Innenseite eines jeden Schenkels 2 je eine Führungsrille 5, die an ihrem rückwärtigen Ende am tiefsten ist und zum Vorderende hin flacher wird. Diese Führungsrille 5 ist im Abstand zur Ober- und Unterseite des zugehörigen Schenkels 2 angeordnet, so daß sie von oben oder unten nicht sichtbar ist. In den beiden aneinanderstoßenden Führungsrillen 5 ist eine Kugel 6, beispielsweise aus Metall, gelagert, die sich innerhalb der Führungsrillen hin- und herbewegen kann, wobei die Führungsrillen mit ihren Ober- und Unterrändern ein Herausfallen der Kugel nach oben oder unten verhindern.

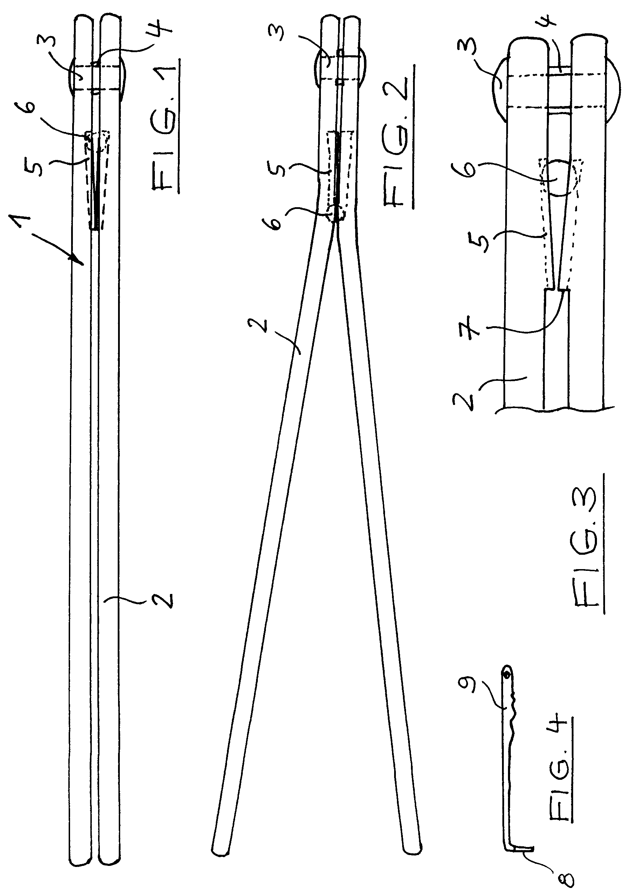

Figur 3 zeigt die genaue Anordnung der Führungsrillen 5. Diese weisen an ihrer Ober- und Unterkante nach vorne schräg einwärts verlaufende vorstehende Abschnitte 7 auf, die im gespreizten Zustand der Schenkel zusammen mit einem vorstehenden Abschnitt an der vorderen Begrenzung der jeweiligen Rille ein Herausfallen der Kugel verhindern. Die vorstehenden Abschnitte sind dabei vorzugsweise gegeneinander versetzt angeordnet, so daß sie im Parallelzustand der Schenkel ineinandergreifen können. Diese Ausführungsform ist in Figur 3 nicht gezeigt.

Im Transportzustand des Gerätes befindet sich die Kugel 6 im hinteren Bereich der Führungsrillen und stößt gegen die rückwärtige Begrenzung. Soll das Gerät in seine Arbeitsstellung überführt werden, wird es in eine aufrechte Stellung gebracht, so daß das hintere Ende oben liegt. Durch Auseinanderspreizen der Schenkel 2 rollt die Kugel 6 in den Führungsrillen 5 nach vorne und erreicht die in Figur 2 gezeigte vordere Endstellung. Läßt man nunmehr die Vorderenden der Schenkel los, so bewegen sich diese etwas nach innen bis in ihre durch die Kugel 6 vorgegebene Endstellung, die in Figur 2 gezeigt ist. In dieser Stellung kann das Gerät zum Jäten, Hacken u. dgl. verwendet werden. Will man mit dem Gerät etwas greifen, so faßt man vor der Kugel die beiden Schenkel an und klemmt diese zusammen.

Um das Gerät wieder in die Transportstellung zurückzuführen, wird es erneut in die aufrechte Stellung gebracht, wobei jetzt die Vorderenden der Schenkel oben zu liegen kommen. Durch geringfügiges Auseinanderspreizen wird der auf die Kugel von den Schenkeln ausgeübte Druck entlastet, so daß die Kugel in den Führungsrillen 5 in ihre Ausgangsstellung zurückrollen kann. Die Schenkel schließen sich dann selbsttätig.

## Patentansprüche

1. Gerät zum Jäten von Unkraut, Auflockern von Erde, Aufheben von Abfällen u. dgl. mit zwei an einem Ende miteinander verbundenen Schenkeln, deren Vorderenden einen Bearbeitungsabschnitt und deren rückwärtige Enden einen Griffabschnitt bilden, dadurch gekennzeichnet, daß die Schenkel (2) vom Bearbeitungsabschnitt (8) her gesehen vor ihrer Verbindungsstelle auf ihren Innenseiten je eine sich in Richtung zur Verbindungsstelle vertiefende Führungsrille (5) aufweisen und daß in den beiden benachbarten Führungsrillen (5) der Schenkel (2) ein durch Spreizen der Schenkel (2) vor- und zurückbewegbarer Körper angeordnet ist, in dessen Vorderstellung die Schenkel (2) eine permanente gespreizte Arbeitsstellung einnehmen und in dessen rückwärtiger Lage die Schenkel (2) parallel zueinander angeordnet sind.

2. Gerät nach Anspruch 1, dadurch gekennzeichnet, daß die beiden Führungsrillen (5) an ihren Vorder- und/oder Ober- und Unterrändern zum anderen Schenkel (2) hin vorstehende, ineinandergreifende Abschnitte (7) aufweisen, die ein Herausfallen des Körpers verhindern.

3. Gerät nach Anspruch 1 oder 2, dadurch gekennzeichnet, daß sich die Führungsrillen (5) im Abstand von der Ober- und Unterkante der Schenkel (2) erstrecken.

4. Gerät nach einem der vorangehenden Ansprüche, dadurch gekennzeichnet, daß der Körper eine Kugel (6) ist.

5. Gerät nach einem der vorangehenden Ansprüche, dadurch gekennzeichnet, daß die Vorderenden der Schenkel (2) in der vordersten Lage des bewegbaren Körpers etwa mit einem Abstand von 6 cm gespreizt sind.
